# EUROPEAN PATENT APPLICATION

(11) **EP 4 672 462 A1**
(43) Date of publication of application: **31.12.2025**
(21) Application number: 24876007.6
(22) Date of filing: 13.05.2024
(51) Int. Cl.: H01M 50/244

(54) **BOX, BATTERY, ELECTRIC DEVICE**

(30) Priority: 13.10.2023 CN 202311329044
(71) Applicant: Contemporary Amperex Technology Co., Limited, Ningde, Fujian 352100 (CN)
(72) Inventor: LIU, Zhiming, Ningde, Fujian 352100 (CN)
(74) Representative: Ziebig Hengelhaupt Intellectual Property Attorneys Patentanwaltskanzlei PartGmbB
(86) International application number: PCT/CN2024/092868
(87) International publication number: WO 2025/077180

(57) **Abstract**

Embodiments of the present application provide a box, a battery and an electrical apparatus. The box includes: a plurality of beams enclosing and forming a first accommodating space, the first accommodating space being configured to accommodate a battery high-voltage module; and a thermal management component arranged to intersect with the beams and configured to regulate the temperature of the battery high-voltage module; wherein in the thickness direction of the thermal management component, the thermal management component is located in the first accommodating space. With the box, the battery and the electrical apparatus of the embodiments of the present application, by providing a thermal management component to regulate the temperature of the battery high-voltage module, the battery high-voltage module can be cooled down in time during the use of the battery, thereby improving the service life of the battery high-voltage module.

## Description

### CROSS-REFERENCE TO RELATED APPLICATIONS

The present application claims priority to Chinese Patent Application No. 202311329044.4, entitled "BOX, BATTERY AND ELECTRICAL APPARATUS" and filed on October 13, 2023, which is incorporated herein by reference in its entirety.

### TECHNICAL FIELD

Embodiments of the present application relate to the technical field of batteries, in particular to a box, a battery and an electrical apparatus.

### BACKGROUND

Usually, the box of a battery is used not only to accommodate battery cells, but also to accommodate the battery high-voltage module. During the use of the battery, the temperature rise of the battery high-voltage module also increases. If the battery high-voltage module cannot be cooled down in time, the service life of the battery high-voltage module will be affected and battery failure occurs.

### SUMMARY OF THE INVENTION

In view of this, embodiments of the present application provide a box, a battery and an electrical apparatus. By providing a thermal management component to regulate the temperature of the battery high-voltage module, the battery high-voltage module can be cooled down in time during the use of the battery, thereby improving the service life of the battery high-voltage module.

In a first aspect, a box is provided, comprising: a plurality of beams enclosing and forming a first accommodating space, the first accommodating space being configured to accommodate a battery high-voltage module; and a thermal management component arranged to intersect with the beams and configured to regulate the temperature of the battery high-voltage module; where in the thickness direction of the thermal management component, the thermal management component is located in the first accommodating space.

In this embodiment, on one hand, by providing a thermal management component to regulate the temperature of the battery high-voltage module, the temperature of the battery high-voltage module can be reduced in time during the use of the battery, thereby improving the service life of the battery high-voltage module; on the other hand, in the thickness direction of the thermal management component, the thermal management component is arranged in the first accommodating space, which can reduce the size of the box in the thickness direction of the thermal management component.

In a possible implementation, the beams each include a main body portion and an extension portion connected to each other, the extension portion extends from the main body portion toward the first accommodating space, and the thermal management component is fixedly connected to the extension portion.

In this embodiment, by fixedly connecting the thermal management component to the extension portion, the combination strength between the two can be enhanced; on the other hand, the extension portion and the beam are integrally provided and the extension portion extends from the main body portion toward the first accommodating space, thereby increasing the width of the beam, which can increase the vibration frequency of the battery when it is subjected to impact, thereby facilitating the uniform distribution of the electrolyte inside the battery and improving the charging and discharging performance of the battery.

In a possible implementation, a surface of the extension portion facing the battery high-voltage module is flush with a surface of the thermal management component facing the battery high-voltage module.

In this embodiment, by arranging the surface of the extension portion facing the first accommodating space to be flush with the surface of the thermal management component facing the first accommodating space, placement of the battery high-voltage module can be facilitated and the utilization of the first accommodating space can be maximized.

In a possible implementation, the thermal management component is fixedly connected to the beam by welding.

In this embodiment, by fixedly connecting the thermal management component to the beam by welding, the structural strength of the box can be improved without destroying the integrity of the box. In addition, since the thermal management component is arranged in the through hole formed by the beams and the thermal management component and the beams can be directly welded, there is no need to add additional blocking measures, which greatly reduces the complexity in preparation of the box.

In a possible implementation, the thermal management component includes a first heat exchange plate, and a flow channel of the first heat exchange plate is curved.

In this embodiment, the flow channel of the first heat exchange plate is designed to be curved, which is beneficial for increasing the flow length of the fluid in a limited space, thereby improving the heat dissipation efficiency. In addition, the flow channel of the first heat exchange plate is designed to be curved, which can also be understood as preparing the first heat exchange plate by a stamping process, which is beneficial for reducing the weight of the box, thereby improving the energy density of the battery.

In a possible implementation, the box further includes: a first protective plate arranged to intersect with the beam and arranged on a side of the first heat exchange plate away from the first accommodating space.

In this embodiment, a first protective plate is arranged on a side of the first heat exchange plate away from the first accommodating space, which can protect the first heat exchange plate on one hand and improve the overall strength of the box on the other hand.

In a possible implementation, in the thickness direction of the thermal management component, the first protective plate is located in the first accommodating space.

In this embodiment, through the provision that in the thickness direction of the thermal management component, the first protective plate is arranged in the first accommodating space, the size of the box in the thickness direction of the thermal management component can be reduced.

In a possible implementation, a buffer is provided between the first heat exchange plate and the first protective plate.

In this embodiment, by providing a buffer between the first heat exchange plate and the first protective plate, the impact of the bottom ball hitting on the inside of the battery can be reduced.

In a possible implementation, the thermal management component includes a second heat exchange plate, and the flow channel of the second heat exchange plate is linear.

In this embodiment, the flow channel of the second heat exchange plate is designed to be linear, which can also be understood as preparing the second heat exchange plate by a profile extrusion process, which facilitates the rapid flow of the fluid inside the profile, thereby improving the heat dissipation efficiency. In addition, the second heat exchange plate prepared by the profile extrusion process can directly support the battery high-voltage module without the need to further provide a support plate under the thermal management component, which is beneficial for reducing costs.

In a possible implementation, the second heat exchange plate has an opening at both ends along a first direction, the first direction being an extension direction of the flow channel, and the box further includes: a sealing strip arranged at the opening for blocking the opening.

In this embodiment, a sealing strip is arranged at the opening at both ends of the second heat exchange plate along the first direction to block the opening, so that the flow channel forms a closed loop in the second heat exchange plate, thereby reducing the possibility of leakage.

In a possible implementation, the sealing strip is a metal strip, and the metal strip is fixedly connected to the second heat exchange plate by welding.

In this embodiment, the metal strip is fixedly connected to the second heat exchange plate by welding to block the opening of the second heat exchange plate, so that the possibility of leakage can be further reduced.

In a possible implementation, the metal strip runs through the second heat exchange plate along a second direction, the second direction being the length direction of the metal strip.

In this embodiment, the metal strip runs through the second heat exchange plate along the second direction, thereby facilitating the operation of welding between the metal strip and the second heat exchange plate.

In a possible implementation, in a direction perpendicular to the thickness direction of the heat management component, the first accommodating space is located at an end of the box.

In this embodiment, the first accommodating space is arranged at the end of the box, so that the battery cells can be centrally arranged and the remaining space in the box after the battery cells are arranged can be fully utilized, thereby improving the space utilization rate of the box.

In a possible implementation, a plurality of beams also enclose and form a second accommodating space, the second accommodating space is adjacent to the first accommodating space, and the second accommodating space is configured to accommodate the battery cells. The box further includes: a second protective plate configured to support the battery cells, the second protective plate extending to the side of the thermal management component away from the battery high-voltage module.

In this embodiment, the second protective plate configured to support the battery cells is extended to the side of the thermal management component away from the battery high-voltage module, which can improve the supporting strength of the box.

In a second aspect, a battery is provided, including a battery high-voltage module and a box in the first aspect and any possible implementation thereof, the battery high-voltage module being arranged in a first accommodating space of the box.

In a possible implementation, in a direction perpendicular to the thickness direction of the thermal management component, the first accommodating space is located at an end of the box.

In a possible implementation, the battery further includes a battery cell, the battery cell is arranged in a second accommodating space of the box, and the second accommodating space is adjacent to the first accommodating space.

In a third aspect, an electrical apparatus is provided, including the battery in the second aspect and any possible implementation thereof, the battery being configured to supply electric energy to the electrical apparatus.

### BRIEF DESCRIPTION OF DRAWINGS

In order to more clearly illustrate the technical solutions of the embodiments of the present application, the drawings to be used in the description of the embodiments of the present application will be described briefly below. Obviously, the drawings in the following description are merely some embodiments of the present application. For those skilled in the art, other drawings can also be obtained according to these drawings without any creative effort.
Fig. 1 is a schematic structural diagram of a vehicle disclosed in an embodiment of the present application;
Fig. 2 is a schematic structural diagram of a battery disclosed in an embodiment of the present application;
Fig. 3 is a schematic internal structural diagram of a box disclosed in an embodiment of the present application;
Fig. 4 is a partial sectional view of a box disclosed in an embodiment of the present application;
Fig. 5 is a partial sectional view of a box disclosed in another embodiment of the present application;
Fig. 6 is a schematic structural diagram of a heat exchange plate disclosed in an embodiment of the present application;
Fig. 7 is a schematic structural diagram of a heat exchange plate disclosed in another embodiment of the present application; and
Fig. 8 is a partial sectional view of a box disclosed in yet another embodiment of the present application.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. Based on the embodiments in the present application, all other embodiments obtained by those of ordinary skill in the art without creative effort fall within the protection scope of the present application.

Unless otherwise defined, all technical and scientific terms used in the present application shall have the same meanings as those generally understood by those skilled in the technical field to which the present application belongs. The terms used in the specification of the present application are merely for the purpose of describing specific embodiments and are not intended to limit the present application. The terms "include" and "have" and any variations thereof in the specification and claims of the present application and the above Description of Drawings are intended to cover non-exclusive inclusion. The terms "first," "second," etc. in the specification and the claims of the present application as well as the above drawings are used to distinguish different objects, rather than to describe a specific order or primary-secondary relationship.

Orientation words appearing in the following description are all directions shown in the drawings, and do not limit the specific structure of the present application. In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skills in the art, the specific meanings of the above terms in the present application may be understood according to specific circumstances.

The reference to "embodiment" in the present application means that specific features, structures or characteristics described with reference to embodiments may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described in the present application may be combined with other embodiments.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the present application, "a plurality of" means two or more (including two), similarly, "a plurality of groups" means two or more groups (including two groups), and "a plurality of sheets" means two or more sheets (including two sheets).

In the embodiments of the present application, a battery cell may be a secondary battery. The secondary battery refers to a battery cell that, after being discharged, can activate an active material by charging for continued use.

The battery cell may be a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery, or the like, which is not limited in the embodiments of the present application.

The battery cell generally includes an electrode assembly. The electrode assembly includes a positive electrode, a negative electrode, and a separator. During charging and discharging of the battery cell, active ions (such as lithium ions) are intercalated and deintercalated back and forth between the positive electrode and the negative electrode. The separator is disposed between the positive electrode and the negative electrode, and can function to prevent short circuits between the positive and negative electrodes and allow active ions to pass through.

In some embodiments, the positive electrode may be a positive electrode plate, and the positive electrode plate may include a positive electrode current collector and a positive electrode active material disposed on at least one surface of the positive electrode current collector.

For example, the positive electrode current collector has two surfaces opposite to each other in a thickness direction of the positive electrode current collector, and the positive electrode active material layer is provided on either or both of the two opposite surfaces of the positive electrode current collector.

As an example, a metal foil or a composite current collector may be used as the positive electrode current collector. For example, silver surface-treated aluminum or stainless steel, stainless steel, copper, aluminum, nickel, carbon electrode, carbon, nickel, titanium, or the like may be used as the metal foil. The composite current collector may include a polymer material substrate layer and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. The example of the lithium-containing phosphate may include but is not limited to at least one of lithium iron phosphate (such as LiFePO4 (LFP for short)), a composite material of lithium iron phosphate and carbon, lithium manganese phosphate (such as LiMnPO4), a composite material of lithium manganese phosphate and carbon, lithium manganese iron phosphate, and a composite material of lithium manganese iron phosphate and carbon.

In some embodiments, the negative electrode may be a negative electrode plate, and the negative electrode plate may include a negative electrode current collector.

As an example, the negative electrode current collector may be made of a metal foil or composite current collector. For example, silver surface-treated aluminum or stainless steel, stainless steel, copper, aluminum, nickel, carbon electrode, carbon, nickel, titanium, or the like may be used as the metal foil. The composite current collector may include a high molecular material substrate layer and a metal layer. The composite current collector can be formed by forming a metal material (copper, copper alloys, nickel, nickel alloys, titanium, titanium alloys, silver and silver alloys, etc.) on a polymer material substrate (such as substrate of polypropylene, polyethylene terephthalate, polybutylene terephthalate, polystyrene, polyethylene, etc.).

For example, the negative electrode plate may include a negative electrode current collector and a negative electrode active material provided on at least one surface of the negative electrode current collector.

By way of example, the negative electrode current collector has two opposite surfaces in its own thickness direction, and the negative electrode active material is provided on either or both of the two opposite surfaces of the negative electrode current collector.

For example, the negative electrode active material for the battery cell that is commonly known in this field can be used as the negative electrode active material. As an example, the negative electrode active material may include at least one of the following materials: artificial graphite, natural graphite, soft carbon, hard carbon, silicon-based materials, tin-based materials, lithium titanate, and the like.

In some embodiments, a foam metal may be used as the negative electrode. The foam metal may be foam nickel, foam copper, foam aluminum, foam alloy, foam carbon, or the like. When the foam metal is used as the negative electrode plate, the surface of the foam metal may not be provided with a negative electrode active material, and of course, may alternatively be provided with a negative electrode active material.

As an example, a lithium source material, a potassium metal, or a sodium metal may also be filled or/and deposited in the negative electrode current collector, and the lithium source material is a lithium metal and/or a lithium-rich material.

In some embodiments, the material of the positive electrode current collector may be aluminum, and the material of the negative electrode current collector may be copper.

In some implementations, the electrode assembly further includes a separator provided between the positive electrode and the negative electrode.

In some implementations, the separator is a separator film. The type of the separator film is not particularly limited in the present application, and any well-known separator film having good chemical stability, mechanical stability, and a porous structure can be selected.

As an example, the main material of the separator film may be selected from at least one of glass fiber, non-woven fabric, polyethylene, polypropylene, polyvinylidene fluoride, and ceramic.

In some implementations, the separator is a solid electrolyte. The solid electrolyte is provided between the positive electrode and the negative electrode, and functions to transport ions and isolate the positive electrode from the negative electrode.

In some implementations, the battery cell further includes an electrolyte. The electrolyte plays a role of conducting ions between the positive electrode and the negative electrode. The type of the electrolyte is not specifically limited in the present application and can be selected according to requirements. The electrolyte may be in a liquid state, a gel state, or a solid state.

In some implementations, the electrode assembly is of a wound structure. The positive electrode plate and the negative electrode plate are wound into the wound structure.

In some implementations, the electrode assembly is of a stacked structure.

As an example, a plurality of positive electrode plates and a plurality of negative electrode plates may be provided, and the plurality of positive electrode plates and the plurality of negative electrode plates may be alternately stacked.

As an example, a plurality of positive electrode plates may be provided, and the negative electrode plate may be folded to form a plurality of stacked folded segments, with one positive electrode plate sandwiched between adjacent folded segments.

As an example, both the positive electrode plates and the negative electrode plates are folded to form a plurality of stacked folded segments.

As an example, a plurality of separators may be provided, each arranged between any adjacent positive electrode plate or negative electrode plate.

As an example, the separator may be continuously arranged, and may be arranged between any adjacent positive electrode plate or negative electrode plate through folding or winding.

In some implementations, the shape of the electrode assembly may be a cylinder, a flat shape, a polygon prism, or the like.

In some implementations, the electrode assembly is provided with tabs that can conduct current out from the electrode assembly. The tabs include a positive tab and a negative tab.

In some implementations, the battery cell may include a shell. The shell is configured to package components such as the electrode assembly and the electrolyte. The shell may be a steel shell, an aluminum shell, a plastic shell (such as polypropylene), a composite metal shell (such as a copper-aluminum composite shell), an aluminum-plastic film, or the like. The shell includes a case and a cover plate.

For example, the battery cell may be a cylindrical battery cell, a prismatic battery cell, a pouch cell, or a battery cell in another shape. The prismatic battery cell includes a square-shell battery cell, a blade-shaped battery cell, and a multi-prism battery. For example, the multi-prism battery may be a hexagonal prism battery. The present application has no special limitation.

The battery mentioned in the embodiments of the present application may be a single physical module including one or more battery cells to provide higher voltage and capacity. When there are a plurality of battery cells, the plurality of battery cells are connected by series connection, or parallel connection, or parallel-series connection through a bus component.

In some embodiments, the battery may be a battery module. When there are a plurality of battery cells, the plurality of battery cells are arranged and fixed to form a battery module.

In some embodiments, the battery may be a battery pack. The battery pack includes a box and a battery cell. The battery cell or the battery module is accommodated in the box.

In some embodiments, the box may serve as a part of a chassis structure of a vehicle. For example, a part of the box may become at least a part of a floor of the vehicle, or a part of the box may become at least a part of a cross beam and a longitudinal beam of the vehicle.

The technical solutions described in the embodiments of the present application are all applicable to various apparatuses using batteries, such as mobile phones, portable devices, laptops, battery vehicles, electric toys, electric tools, electric vehicles, ships, spacecrafts, and the like. For example, the spacecrafts include airplanes, rockets, space shuttles, spaceships, and the like.

It should be understood that the technical solutions described in the embodiments of the present application are not only applicable to the apparatuses described above, but also applicable to all apparatuses using batteries. However, for the sake of brevity, the following embodiments take electric vehicles as an example for description.

Usually, the box of the battery is used not only to accommodate battery cells, but also to accommodate the battery high-voltage module. During the use of the battery, the temperature rise of the battery high-voltage module also increases. If the battery high-voltage module cannot be cooled down in time, the service life of the battery high-voltage module will be affected and battery failure occurs.

In view of this, an embodiment of the present application provides a box, which includes a plurality of beams and a thermal management component. The plurality of beams enclose and form a first accommodating space configured to accommodate a battery high-voltage module. The thermal management component is configured to regulate the temperature of the battery high-voltage module and is fixedly connected to the beams. In the thickness direction of the thermal management component, the thermal management component is located in the first accommodating space. On one hand, by providing a thermal management component to regulate the temperature of the battery high-voltage module, the temperature of the battery high-voltage module can be reduced in time during the use of the battery, thereby improving the service life of the battery high-voltage module; on the other hand, through the design where in the thickness direction of the thermal management component, the thermal management component is located in the first accommodating space, the size of the box in the thickness direction of the thermal management component can be reduced.

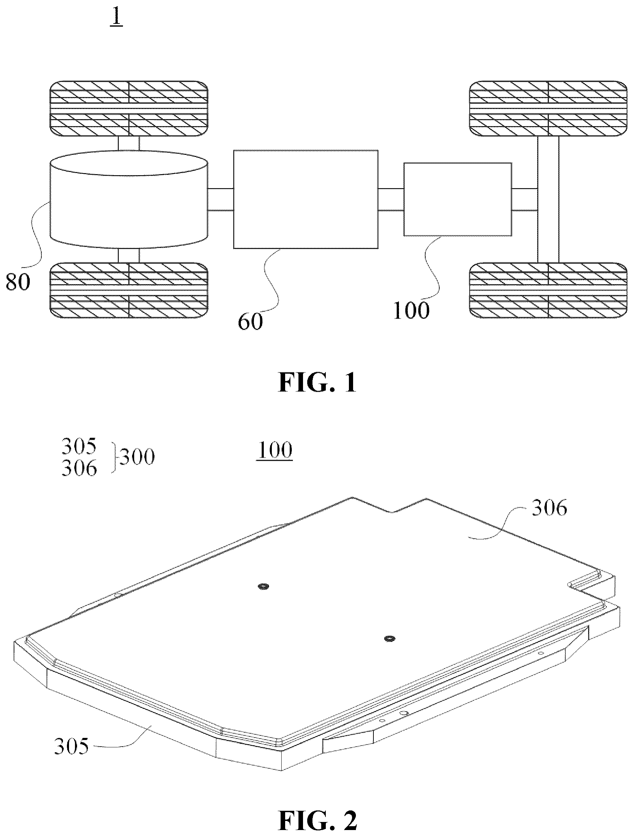

For example, as shown in Fig. 1, a schematic structural diagram of a vehicle 1 according to an embodiment of the present application is shown. The vehicle 1 may be a fuel vehicle, a gas vehicle, or a new energy vehicle, and the new energy vehicle may be an all-electric vehicle, a hybrid vehicle, an extended range electric vehicle, or the like. A motor 80, a controller 60, and a battery 100 may be disposed inside the vehicle 1, where the controller 60 is configured to control the battery 100 to supply power to the motor 80. As an example, the battery 100 may be disposed at the bottom or the head or the tail of the vehicle 1. The battery 100 may be used for supplying power to the vehicle 1. For example, the battery 100 may be used as an operating power source of the vehicle 1, which is used for a circuit system of the vehicle 1, for example, for operation power requirements of the vehicle 1 during starting, navigation, and running. In another embodiment of the present application, the battery 100 can serve not only as an operating power supply for the vehicle 1, but also as a driving power source for the vehicle 1, so as to replace or partially replace fuel or natural air to provide driving power for the vehicle 1.

In order to meet different power usage requirements, the battery may include a plurality of battery cells of different types, for example, battery cells with different security performances. The plurality of battery cells can be connected in series, in parallel or in series-parallel connection according to the types of the battery cells to form a plurality of battery cell groups, and the plurality of battery cell groups are then connected in series to form a battery, where the series-parallel connection may be a mixture of series connection and parallel connection. The plurality of different battery cells may also be directly connected in series, in parallel or in series-parallel connection to form a battery. That is, a plurality of battery cells can directly form a battery, or battery cell groups can be formed according to the types of battery cells first, and then a battery can be formed by the battery cell groups.

Fig. 2 shows a schematic structural diagram of a battery 100 according to an embodiment of the present application. The battery 100 may include a plurality of battery cells (not shown in the figure). The battery 100 may further include a box 300 (or an enclosure). The box 300 is of a hollow structure inside, and the plurality of battery cells are accommodated in the box 300. As shown in Fig. 2, the box 300 may include two parts, which are referred to as a box body 305 and a box cover 306, respectively, where the box body 305 and the box cover 306 are snap-fitted together. The shape of the box body 305 and the box cover 306 may be determined according to the shape of a combination of the plurality of battery cells.

In some embodiments, the box body 305 and the box cover 306 may each have an opening. For example, the box body 305 and the box cover 306 may each be a hollow cuboid with only one surface being an open surface, the opening of the box body 305 and the opening of the box cover 306 are arranged opposite to each other, and the box body 305 and the box cover 306 are snap-fitted together to form a box with a closed chamber. After the plurality of battery cells are connected in parallel or in series or in parallel-series combination, they are placed in the box formed by the box body 305 and the box cover 306 snap-fitted together.

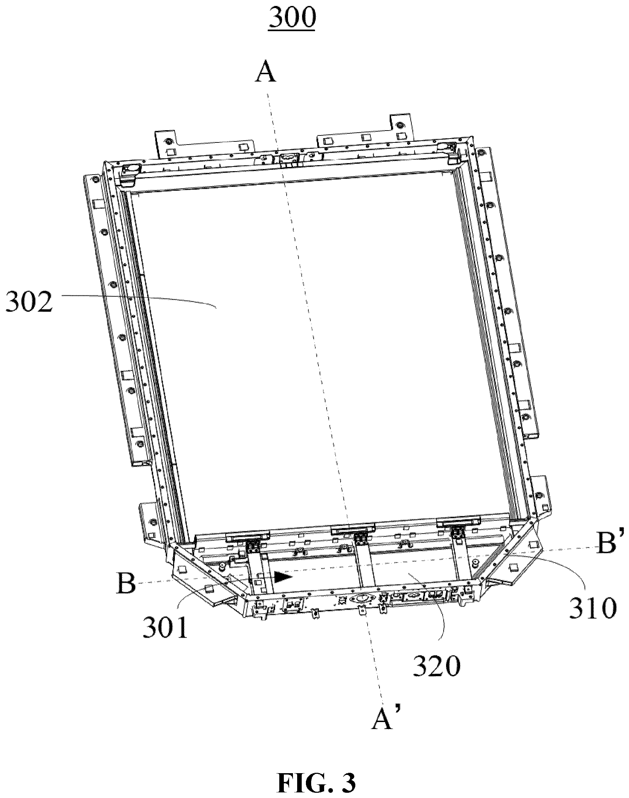

Fig. 3 shows a schematic internal structural diagram of a box 300 according to an embodiment of the present application. The schematic external structural diagram of the box 300 can be seen in Fig. 2.

As shown in Fig. 3, the box 300 is of a hollow structure inside, and may include a plurality of beams 310. The plurality of beams 310 may include side beams and internal beams. The side beams refer to the outermost frames of the box, while the internal beams are arranged inside the hollow structure of the box 300. For example, the internal beams may be expansion beams. That is, the box 300 may be enclosed by side beams to form a large accommodating space, and then the large accommodating space can be divided into a plurality of sub-spaces by arranging internal beams in the box 300.

Typically, the box 300 is used to accommodate not only battery cells but also a battery high-voltage module. That is, the internal accommodating space of the box 300 can be divided into at least two sub-spaces, one sub-space for accommodating the battery cells and the other sub-space for accommodating the battery high-voltage module. The sub-space for accommodating the battery high-voltage module is the first accommodating space 301 in the embodiments of the present application. The first accommodating space 301 may be formed by being enclosed by a plurality of beams 310. For example, the first accommodating space 301 is formed by being enclosed by side beams and internal beams.

The battery high-voltage module is a high-voltage power distribution apparatus that may include a high-voltage relay, a high-voltage fuse and a related chip. It can realize signal communication with related modules to ensure the safety of high-voltage power consumption of electrical apparatuses. Optionally, in addition to accommodating the battery high-voltage module, the first accommodating space 301 of the embodiments of the present application can also accommodate a battery control module for managing and monitoring the battery. For example, the battery control module may include a battery management unit (BMU), which can control the closing and opening of the relay to control the charging or discharging of the battery.

The box 300 may further include a thermal management component 320, which may be arranged to intersect with the beam 310 to regulate the temperature of the battery high-voltage module. For example, the box 300 may include a box body and a box cover as shown in Fig. 2, and the box body is provided with an opening, and the box cover covers the opening to enclose the battery high-voltage module and/or battery cells in the hollow structure of the box 300, and the thermal management component 320 may be arranged opposite to the opening of the box body. When the box 300 is placed as shown in Fig. 3, the thermal management component 320 can also be understood as being arranged at the bottom of the battery high-voltage module. It should be understood that the thermal management component 320 in the embodiments of the present application may generally include a heat exchange plate or a spray structure, which can contain liquid or gas to heat or cool the battery high-voltage module. In the case of cooling or lowering the temperature of the battery high-voltage module, the thermal management component 320 may be configured to contain a cooling fluid to lower the temperature of the battery high-voltage module. In this case, the thermal management component 320 may also be called a cooling component, a cooling system or a cooling plate, etc. The fluid contained by the thermal management component may also be called a cooling medium or a cooling fluid, and more specifically, may be called a cooling liquid or a cooling gas. Optionally, the fluid may flow in circulation to achieve a better temperature regulation effect. Optionally, the fluid may be water, a mixture of water and ethylene glycol, air, or the like.

Optionally, the thermal management component 320 may be fixedly connected to the beam 310 by various means. For example, the thermal management component 320 is fixedly connected to the beam 310 by welding, gluing, mechanical connection, or the like. In other embodiments, the thermal management component 320 and the beam 310 may be spliced together only through structural design and not fixed by other means. For example, one of the thermal management component 320 and the beam 310 has a protrusion and the other has a recess, and the protrusion and the recess are mated with each other.

It should be noted that the thermal management component 320 and the beam 310 are arranged to intersect with each other. It can be understood to mean that the main structure of the thermal management component 320 and the main structure of the beam 310 can be arranged at an angle, for example, the main structure of the thermal management component 320 is perpendicular to the main structure of the beam 310.

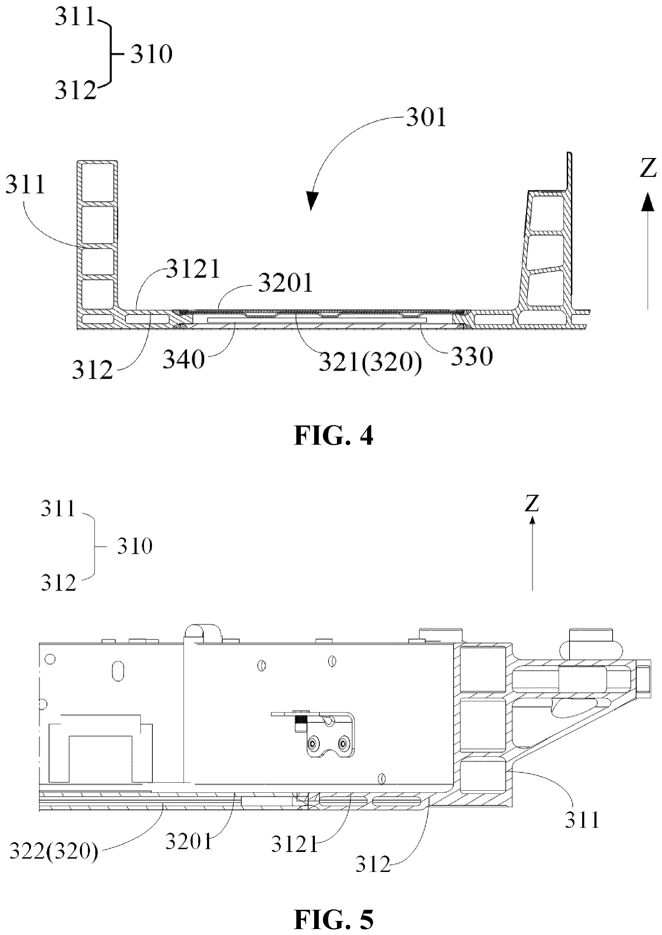

Fig. 4 shows a partial sectional view of a box 300 shown in Fig. 3 along line A-A'. Fig. 5 shows a partial sectional view of another box 300 shown in Fig. 3 along line B-B'.

As shown in Figs. 4 and 5, in the thickness direction Z of the thermal management component 320, the thermal management component 320 is located in the first accommodating space 301. In other words, the thermal management component 320 is located between the side walls of the plurality of beams 310 enclosing and forming the first accommodating space 301, and in the thickness direction Z of the thermal management component 320, the thermal management component 320 does not extend beyond the beams 310.

In this embodiment, on one hand, by providing a thermal management component 320 to regulate the temperature of the battery high-voltage module, the temperature of the battery high-voltage module can be reduced in time during the use of the battery, thereby improving the service life of the battery high-voltage module; on the other hand, in the thickness direction Z of the thermal management component 320, the thermal management component 320 is located in the first accommodating space 301, which can reduce the size of the box 300 in the thickness direction Z of the thermal management component 320.

As shown in Figs. 4 and 5, the beam 310 includes a main body portion 311 and an extension portion 312 connected to each other. The extension portion 312 extends from the main body portion 311 toward the first accommodating space 301, and the thermal management component 320 is fixedly connected to the extension portion 312.

It should be understood that the main body portion 311 can limit the movement of the battery high-voltage module in the horizontal direction, and the thermal management component 320 and the extension portion 312 of the beam 310 can jointly limit the movement of the battery high-voltage module in the thickness direction Z. Optionally, the main body portion 311 may be arranged perpendicular to the extension portion 312, the thermal management component 320 may be arranged perpendicular to the main body portion 311, and the thermal management component 320 may be arranged parallel to the extension portion 312.

In some embodiments, the extension portion 312 may extend from the bottom of the main body portion 311 toward the first accommodating space 301. In this case, the fixed connection between the extension portion 312 and the thermal management component 320 enables the first accommodating space 301 to form a complete accommodating space in the thickness direction Z. In other embodiments, the extension portion 312 may alternatively extend from a position in the middle area of the main body portion 311 in the thickness direction Z toward the first accommodating space 301. In this case, the fixed connection between the extension portion 312 and the thermal management component 320 allows the first accommodating space 301 to be divided into a plurality of sub-accommodating spaces in the thickness direction Z.

In this embodiment, by fixedly connecting the thermal management component 320 to the extension portion 312, the combination strength between the two can be enhanced; on the other hand, the extension portion 312 and the main body portion 311 are integrally provided and the extension portion 312 extends from the main body portion 311 toward the first accommodating space 301, thereby increasing the width of the beam 310, which can increase the vibration frequency of the battery when it is subjected to impact, thereby facilitating the uniform distribution of the electrolyte inside the battery and improving the charging and discharging performance of the battery.

With continued reference to Figs. 4 and 5, a surface 3121 of the extension portion 312 facing the battery high-voltage module is flush with a surface 3201 of the thermal management component 320 facing the battery high-voltage module.

In other embodiments, the surface 3121 of the extension portion 312 facing the first accommodating space 301 may not be flush with the surface 3201 of the thermal management component 320 facing the first accommodating space 301. That is, the surface 3121 of the extension portion 312 facing the first accommodating space 301 and the surface 3201 of the thermal management component 320 facing the first accommodating space 301 form a stepped structure.

In this embodiment, by arranging the surface 3121 of the extension portion 312 facing the first accommodating space 301 to be flush with the surface 3201 of the thermal management component 320 facing the first accommodating space 301, placement of the battery high-voltage module can be facilitated and the utilization of the first accommodating space 301 can be maximized.

Optionally, in an embodiment of the present application, the thermal management component 320 is fixedly connected to the beam 310 by welding.

In this embodiment, by fixedly connecting the thermal management component 320 to the beam 310 by welding, the structural strength of the box 300 can be improved without destroying the integrity of the box 300. In addition, since the thermal management component 320 is arranged in the through hole formed by the beams 310 and the thermal management component 320 and the beams 310 can be directly welded, there is no need to add additional blocking measures, which greatly reduces the complexity in preparation of the box 300.

Further optionally, the thermal management component 320 is fixedly connected to the beam 310 by means of friction stir welding.

The so-called friction stir welding refers to the use of the heat generated by the friction between the high-speed rotating welding tool and the workpiece to partially melt the material to be welded. When the welding tool moves forward along the welding interface, the plasticized material flows from the front to the rear of the welding tool under the action of the rotating friction force of the welding tool, and forms a dense solid phase weld under the extrusion by the welding tool. The advantages of friction stir welding are low welding cost and simple operation.

In an embodiment, as shown in Fig. 4, the thermal management component 320 includes a first heat exchange plate 321, and a flow channel 3213 of the first heat exchange plate 321 is curved.

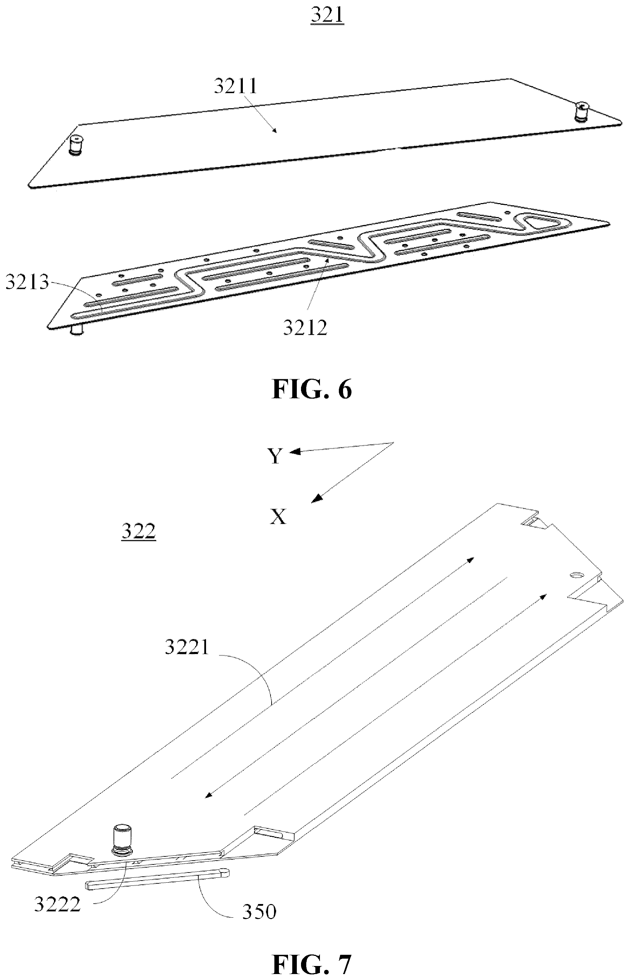

That is, the first heat exchange plate 321 is prepared by a stamping process, and the extension shape of the flow channel 3213 of the first heat exchange plate 321 may be, for example, a serpentine shape, a sine wave shape, a sawtooth wave shape, a sharp pulse shape, or the like. The extension shape of the flow channel 3213 of the first heat exchange plate 321 may alternatively be an irregular bent shape as shown in Fig. 6. As shown in Fig. 6, the first heat exchange plate 321 may include an upper plate 3211 and a lower plate 3212. The flow channel 3213 is stamped on the lower plate 3212. A male joint is provided on the upper plate 3211. The upper plate 3211 and the lower plate 3212 are formed through braze welding to form the first heat exchange plate 321 with the flow channel 3213.

In this embodiment, the flow channel 3213 of the first heat exchange plate 321 is designed to be curved, which is beneficial for increasing the flow length of the fluid in a limited space, thereby improving the heat dissipation efficiency. In addition, the flow channel of the first heat exchange plate 321 is designed to be curved, which can also be understood as preparing the first heat exchange plate 321 by a stamping process, which is beneficial for reducing the weight of the box 300, thereby improving the energy density of the battery.

Further referring to Fig. 4, the box 300 further includes: a first protective plate 330, which is arranged to intersect with the beam 310 and arranged on a side of the first heat exchange plate 321 away from the first accommodating space 301.

It should be noted that the first protective plate 330 is arranged to intersect with the beam 310. It can be understood to mean that the main structure of the first protective plate 330 and the main structure of the beam 310 can be arranged at an angle. For example, the main structure of the first protective plate 330 is perpendicular to the main structure of the beam 310.

Further optionally, the first protective plate 330 is arranged perpendicular to the main body portion 311, and the first protective plate 330 is arranged parallel to the extension portion 312.

Since the first heat exchange plate 321 formed by stamping is usually not strong enough, the first protective plate 330 is provided at the bottom of the first heat exchange plate 321, and can protect the first heat exchange plate 321 on one hand and improve the overall strength of the box 300 on the other hand.

Optionally, the first protective plate 330 may be made of the same material as the box 300. Specifically, the first protective plate 330 may be made of the same material as the beam 310. For example, when the beam 310 is made of aluminum, the first protective plate 330 may be an aluminum plate.

Optionally, as shown in Fig. 4, in the thickness direction Z of the thermal management component 320, the first protective plate 330 is located in the first accommodating space 301.

In other words, the first protective plate 330 is located between the side walls of the plurality of beams 310 enclosing and forming the first accommodating space 301, and in the thickness direction Z of the thermal management component 320, the first protective plate 330 does not extend beyond the beams 310.

Optionally, the first protective plate 330 may be fixedly connected to the beam 310. Further, the first protective plate 330 may be fixedly connected to the beam 310 by welding. For example, the first protective plate 330 is fixedly connected to the beam 310 by means of friction stir welding.

In some embodiments, the first protective plate 330 may be fixedly connected to the extension portion 312 of the beam 310. For example, the first protective plate 330 is fixedly connected to the extension portion 312 of the beam 310 by welding, so that the surface of the first protective plate 330 away from the battery high-voltage module is flush with the surface of the extension portion away from the battery high-voltage module. At the same time, the thermal management component 320 is also fixedly connected to the extension portion 312 of the beam 310 by welding, so that the surface 3201 of the thermal management component 320 facing the battery high-voltage module is flush with the surface 3121 of the extension portion 312 facing the battery high-voltage module.

In other embodiments, the first protective plate 330 and the beam 310 may be spliced together only through structural design and not fixed by other means. For example, one of the first protective plate 330 and the beam 310 has a protrusion and the other has a recess, and the protrusion and the recess are mated with each other.

In this embodiment, in the thickness direction Z of the thermal management component 320, the first protective plate 330 is located in the first accommodating space 301, which can reduce the size of the box 300 in the thickness direction Z of the thermal management component 320. In addition, the first protective plate 330 is fixedly connected to the beam 310, which is beneficial for enhancing the structural strength of the box 300 without destroying the integrity of the box 300.

In other embodiments, the first protective plate 330 may be fixedly connected to the thermal management component 320, but not fixedly connected to the beam 310. For example, the first protective plate 330 is clamped with the thermal management component 320.

Further referring to Fig. 4, a buffer 340 is provided between the first heat exchange plate 321 and the first protective plate 330. In some embodiments, the buffer 340 may be cushioning foam.

In this embodiment, by providing a buffer 340 between the first heat exchange plate 321 and the first protective plate 330, the impact of the bottom ball hitting on the inside of the battery can be reduced.

In another embodiment, as shown in Fig. 5, the thermal management component 320 includes a second heat exchange plate 322, and the flow channel 3221 of the second heat exchange plate 322 is linear.

In other words, the second heat exchange plate 322 is prepared by a profile extrusion process. Extruded profile heat exchange plates are usually of harmonica tube structures, and the flow channels therein are linear, rather than randomly bent like the flow channels of stamped heat exchange plates. In addition, a current collector is arranged at both ends of the heat exchange plate to provide a confluence function. In this embodiment, the flow channel 3221 of the second heat exchange plate 322 is designed to be linear, which can also be understood to mean that the second heat exchange plate 322 is prepared by a profile extrusion process, which facilitates the rapid flow of fluid inside the profile, thereby improving the heat dissipation efficiency. In addition, the second heat exchange plate 322 prepared by the profile extrusion process can directly support the battery high-voltage module without the need to further provide a support plate under the thermal management component 320, which is beneficial for reducing costs.

Optionally, as shown in Fig. 7, the second heat exchange plate 322 has an opening 3222 at both ends along the first direction X, the first direction X is the extension direction of the flow channel 3221, and the box 300 further includes: a sealing strip 350 arranged at the opening 3222 for blocking the opening 3222.

Since both ends of the second heat exchange plate 322 prepared by the profile extrusion process are usually non-closed, in this embodiment, an openings 3222 is provided at both ends of the second heat exchange plate 322 along the first direction X, and a sealing strip 350 is provided at the opening 3222 to block the opening 3222, so that the flow channel 3221 forms a closed loop in the second heat exchange plate 322, thereby reducing the possibility of leakage.

Optionally, a sealing strip 350 may be provided at each end of the second heat exchange plate 322 along the first direction X, so that the sealing structure for blocking the plurality of flow channels 3221 forms a whole, so as to reduce the splicing gap between the sealing strips 350.

Optionally, in an embodiment of the present application, the sealing strip 350 is a metal strip, and the metal strip is fixedly connected to the second heat exchange plate 322 by welding.

In this embodiment, the metal strip is fixedly connected to the second heat exchange plate 322 by welding to block the opening 3222 of the second heat exchange plate 322, so that the possibility of leakage can be further reduced.

In other embodiments, the sealing strip 350 may alternatively be made of a non-metallic material, and may further be fixedly connected to the second heat exchange plate 322 by gluing or other means.

With continued reference to Fig. 7, the metal strip runs through the second heat exchange plate 322 along the second direction Y, so that the metal strip is welded to the second heat exchange plate 322 at the opening of the second heat exchange plate 322 along the second direction Y, the second direction Y being the length direction of the metal strip. For example, at the opening of the second heat exchange plate 322 along the second direction Y, the second heat exchange plate 322 is fixedly connected to the metal strip by argon arc welding.

In this embodiment, after the metal strip is integrated with the second heat exchange plate 322, it has to be arranged between the side walls of the beam 310 and fixedly connected to the beam 310. Therefore, the integrated second heat exchange plate 322 and metal strip form a plane facing the side walls of the beam 310. In this case, it is not convenient to weld and fix the second heat exchange plate 322 and the metal strip at the opening 3222 along the first direction X. The metal strip runs through the second heat exchange plate 322 along the second direction Y, which facilitates the operation of welding the metal strip and the second heat exchange plate 322.

Further referring to Fig. 7, the flow channel 3221 may be only provided in the middle area of the second heat exchange plate 322 along the width direction, then the sealing strip 350 may also only span the middle area. In order to facilitate the welding operation, a notch can be provided in the edge area of the second heat exchange plate 322 along the width direction.

After the sealing strip 350 is integrated with the second heat exchange plate 322, the second heat exchange plate 322 may be further welded to the beam 310.

In some embodiments, in a direction perpendicular to the thickness direction Z of the thermal management component 320, the first accommodating space 301 may be located at an end of the box 300.

For example, as shown in Fig. 3, the first accommodating space 301 may be located at an end of the box 300 in the length direction. As another example, the first accommodating space 301 may alternatively be located at an end of the box 300 in the width direction. In other embodiments, the first accommodating space 301 may alternatively be located at one end or both ends of the length direction of the box 300 , and/or, the first accommodating space 301 may alternatively be located at one end or both ends of the width direction of the box 300.

In this embodiment, the first accommodating space 301 is arranged at the end of the box 300, so that the battery cells can be centrally arranged and the remaining space in the box 300 after the battery cells are arranged can be fully utilized, thereby improving the space utilization rate of the box 300.

In some other embodiments, the first accommodating space 301 may alternatively be located in the middle space of the box 300. For example, the first accommodating space 301 divides the space of the box 300 for accommodating the battery cells into two spaces.

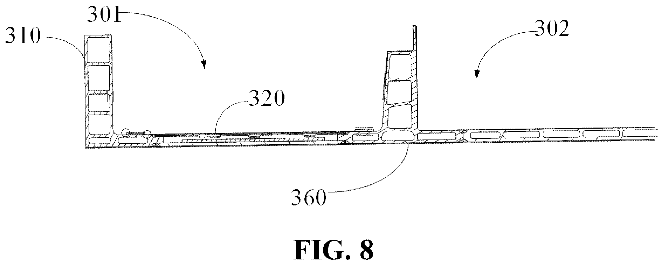

Optionally, as shown in Figs. 3 and 8, a plurality of beams 310 also enclose and form a second accommodating space 302, the second accommodating space 302 is adjacent to the first accommodating space 301, and the second accommodating space 302 is configured to accommodate the battery cells. The box 300 further includes: a second protective plate 360 configured to support the battery cells, the second protective plate 360 extending to the side of the thermal management component 320 away from the battery high-voltage module.

Optionally, the second protective plate 360 may be arranged at the bottom of the battery cells, and the second protective plate 360 may be fixedly connected to the beam 310. For example, the second protective plate 360 is fixedly connected to the beam by means of bolts.

In this embodiment, the second protective plate 360 configured to support the battery cells is extended to the side of the thermal management component 320 away from the battery high-voltage module, which can improve the supporting strength of the box 300.

In other embodiments, the box 300 may further include a thermal management component for performing thermal management adjustment for the battery cells, which may be arranged at the bottom, top, and side of the battery cells. The embodiments of the present application do not limit the location and structural form of the thermal management component for the battery cells.

Referring again to Figs. 3 to 8, an embodiment of the present application provides a box 300, including a plurality of beams 310, which enclose and form a first accommodating space 301 and a second accommodating space 302. The first accommodating space 301 is located at an end of the box 300, and is configured to accommodate a battery high-voltage module, and the second accommodating space 302 is adjacent to the first accommodating space, and is configured to accommodate a battery cell. The beam 310 includes a main body portion 311 and an extension portion 312 connected to each other, and the extension portion 312 extends from the main body portion 311 toward the first accommodating space 301. The box 300 further includes a thermal management component 320, which is arranged at the bottom of the battery high-voltage module. A surface 3121 of the extension portion 312 facing the battery high-voltage module is flush with a surface 3201 of the thermal management component 320 facing the battery high-voltage module, and the thermal management component 320 is fixedly connected to the extension portion 312 by friction stir welding. The thermal management component 320 includes a first heat exchange plate 321, the flow channel 3213 of the first heat exchange plate 321 is curved, and the box 300 further includes a first protective plate 330 and a buffer 340, the first protective plate 330 is arranged at the bottom of the thermal management component 320, and the buffer 340 is arranged between the first protective plate 330 and the thermal management component 320, the surface of the first protective plate 330 away from the battery high-voltage module is flush with the surface of the extension portion 312 away from the battery high-voltage module, and the first protective plate 330 is fixedly connected to the extension portion 312 by friction stir welding. The box 300 further includes a second protective plate 360 arranged at the bottom of the battery cell for supporting the battery cell. The second protective plate 360 extends to the side of the thermal management component 320 away from the battery high-voltage module.

In this embodiment, by arranging the thermal management component 320 in the through hole enclosed and formed by the beams 310, and fixedly connecting the thermal management component 320 to the beams 310 by friction stir welding, the size of the box 300 in the thickness direction Z can be greatly reduced without the need for additional blocking measures, which can reduce costs. In addition, the first protective plate 330 is arranged at the bottom of the thermal management component 320 to enhance the strength of the box 300. Finally, a buffer 340 is provided between the first protective plate 330 and the thermal management component 320 to reduce the impact of the bottom ball hitting on the inside of the battery.

An embodiment of the present application further provides a battery including a battery high-voltage module and the box 300 described in the aforementioned embodiments. The battery high-voltage module is accommodated in the first accommodating space 301 of the box 300.

Optionally, in a direction perpendicular to the thickness direction Z of the thermal management component 320, the first accommodating space 301 may be located at an end of the box 300.

Optionally, the battery further includes a battery cell, the battery cell is arranged in a second accommodating space 302 of the box 300, and the second accommodating space 302 is adjacent to the first accommodating space 301.

Embodiments of the present application further provide an electrical apparatus including the battery having the box 300 of the aforementioned embodiments, the battery being configured to supply electrical energy to the electrical apparatus.

The electrical apparatus may be a vehicle as shown in Fig. 1 or any device utilizing a battery.

Although the present application has been described with reference to the preferred embodiments, various improvements may be made thereto and parts therein may be replaced with equivalents without departing from the scope of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A box, comprising:
a plurality of beams (310) enclosing and forming a first accommodating space (301), the first accommodating space (301) being configured to accommodate a battery high-voltage module; and
a thermal management component (320) arranged to intersect with the beams (310) and configured to regulate the temperature of the battery high-voltage module;
wherein in the thickness direction (Z) of the thermal management component (320), the thermal management component (320) is located in the first accommodating space (301).

2. The box according to claim 1, wherein the beams (310) each comprise a main body portion (311) and an extension portion (312) connected to each other, the extension portion (312) extends from the main body portion (311) toward the first accommodating space (301), and the thermal management component (320) is fixedly connected to the extension portion (312).

3. The box according to claim 2, wherein a surface (3121) of the extension portion (312) facing the battery high-voltage module is flush with a surface (3201) of the thermal management component (320) facing the battery high-voltage module.

4. The box according to any one of claims 1 to 3, wherein the thermal management component (320) is fixedly connected to the beams (310) by welding.

5. The box according to any one of claims 1 to 4, wherein the thermal management component (320) comprises a first heat exchange plate (321), and a flow channel (3213) of the first heat exchange plate (321) is curved.

6. The box according to claim 5, wherein the box (300) further comprises:
a first protective plate (330) arranged to intersect with the beams (310) and arranged on a side of the first heat exchange plate (321) away from the first accommodating space (301).

7. The box according to claim 6, wherein in the thickness direction (Z) of the thermal management component (320), the first protective plate (330) is located in the first accommodating space (301).

8. The box according to claim 6 or 7, wherein a buffer (340) is provided between the first heat exchange plate (321) and the first protective plate (330).

9. The box according to any one of claims 1 to 5, wherein the thermal management component (320) comprises a second heat exchange plate (322), and a flow channel (3221) of the second heat exchange plate (322) is linear.

10. The box according to claim 9, wherein the second heat exchange plate (322) has an opening (3222) at both ends along a first direction (X), the first direction (X) being an extension direction of the flow channel (3221), and the box (300) further comprises:
a sealing strip (350) provided at the opening (3222) and configured to block the opening (3222).

11. The box according to claim 10, wherein the sealing strip (350) is a metal strip, and the metal strip is fixedly connected to the second heat exchange plate (322) by welding.

12. The box according to claim 11, wherein the metal strip runs through the second heat exchange plate (322) along a second direction (Y), the second direction (Y) being the length direction of the metal strip.

13. The box according to any one of claims 1 to 12, wherein in a direction perpendicular to the thickness direction (Z) of the thermal management component (320), the first accommodating space (301) is located at an end of the box (300).

14. The box according to any one of claims 1 to 13, wherein the plurality of beams (310) further enclose and form a second accommodating space (302), the second accommodating space (302) is adjacent to the first accommodating space (301), and the second accommodating space (302) is configured to accommodate a battery cell, and the box (300) further comprises:
a second protective plate (360) configured to support the battery cell, the second protective plate (360) extending to a side of the thermal management component (320) away from the battery high-voltage module.

15. A battery comprising a battery high-voltage module and the box (300) according to any one of claims 1 to 14, wherein the battery high-voltage module is arranged in the first accommodating space (301) of the box (300).

16. The battery according to claim 15, wherein in a direction perpendicular to the thermal management component (320), the first accommodating space (301) is located at an end of the box (300).

17. The battery according to claim 15 or 16, further comprising a battery cell, wherein the battery cell is arranged in a second accommodating space (302) of the box (300), and the second accommodating space (302) is adjacent to the first accommodating space (301).

18. An electrical apparatus comprising the battery according to any one of claims 15 to 17, the battery being configured to supply electrical energy to the electrical apparatus.
